# EUROPEAN PATENT SPECIFICATION

(11) **EP 4 014 703 B1**
(45) Date of publication and mention of the grant of the patent: **12.07.2023**
(21) Application number: 20215403.5
(22) Date of filing: 18.12.2020
(51) Int. Cl.: A01B 39/19, A01B 21/04, A01B 61/04, A01B 63/32

(54) **AGRICULTURAL MACHINE FOR BREAKING THE SOIL AND FOR MECHANICAL WEEDING**
LANDWIRTSCHAFTLICHE MASCHINE ZUR BODENLOCKERUNG UND ZUM MECHANISCHEN UNKRAUTJÄTEN
MACHINE AGRICOLE POUR BRISER LE SOL ET POUR LE DÉSHERBAGE MÉCANIQUE

(43) Date of publication of application: 22.06.2022
(73) Proprietor: Agrimec 3 S.n.c. Di Baraldo Iris & C., 30029 Santo Stino di Livenza (VE) (IT)
(72) Inventor: BORASO, Dino, 30029 SANTO STINO DI LIVENZA (VE) (IT)
(74) Representative: Burchielli, Riccardo

(56) References cited:
- DE-A1-102014 117 668
- US-A1- 2012 048 160
- US-A1- 2013 192 186
- US-A1- 2013 312 988

## Description

This invention relates to an agricultural machine for working soil and, in particular, a machine for breaking the surface crust of soil.

This surface crust is created after heavy rainfall, which can have a 'pounding effect', pressing the earth, for example, after summer storms alternating with intense sunshine.

The same agricultural machine can be used for the mechanical weeding of agricultural crops.

More particularly, the invention relates to an agricultural machine for working the soil, which can be towed by or associated with a tractor and comprising, in a relative possible variant, a three-point coupling to the single-beam frame for lifting and controlling the activities of the machine by means of the above-mentioned tractor.

A series of individual elements are applied to the single-beam frame including a metal arm or bridge supporting a series of hydraulic cylinders or pneumatic actuators (bellows and/or air dampers) with the function of balancing two metal toothed wheels, which are associated to it by means of a support bar.

The hydraulic cylinders or pneumatic actuators (bellows and/or air dampers) are connected together by means of T-pieces and plastic pipe segments to form a single oil or emulsified water closed hydraulic system, or a single closed pneumatic air system.

The closed hydraulic or closed pneumatic system thus made makes it possible to manage the flexibility of the two metal toothed wheels present in each individual element fixed to the single-beam frame, regulating the pressure exerted by them on the ground, both, in particular, when the ground is not level and, as in the vast majority of cases, when the ground is uneven, thus making the activity of breaking up the surface crust homogeneous.

Various models of agricultural machinery with the same functionality as the invention are currently marketed, in which a metal spring is used to control the flexibility of the one or two metal toothed wheels in each individual element attached to the single beam frame.

The extent of the compression or extension of the metal spring used determines a range (minimum or maximum) of vertical travel and pressure (load) of the metal toothed wheels irrespective of the actual extent of the unevenness of the ground being worked, with the result that large gaps are left in the process of breaking up the surface crust.

The relevant prior art also includes patent applications US2013/192186A1, US2013/312988A1, US2012/048160 and DE102014117668A1 wherein are described the technical features present in the preamble to the attached claim 1.

In order to overcome this problem, the solution identified by the invention according to the subject-matter of claim 1 is to replace the above-mentioned metal springs (designed to regulate the vertical stroke and the pressure exerted on the ground by the metal toothed wheels of each single element) with a single closed hydraulic system with liquids (oil or emulsified water) or pneumatic system with air formed by a series of hydraulic cylinders or pneumatic actuators (bellows and/or air dampers) connected to each other which are able to distribute and compensate a constant pressure (load) to be exerted on the metal toothed wheels of each single element of the agricultural machine; in practice, each individual element has an appropriate pressure (load) to be exerted on the metal toothed wheels, which is determined by the different levels of unevenness of the ground on which the wheels operate.

A further aim of the invention is to make an agricultural machine for working the soil and, in particular, for breaking up the surface crust and for mechanically weeding agricultural crops, which allows regulation of the pressure (load) within the closed hydraulic system or the closed pneumatic system to be exerted on the metal toothed wheels of each single element of the agricultural machine.

Another aim of the invention is to make an agricultural machine for working the soil and, in particular, for breaking up the surface crust and for mechanically weeding agricultural crops, which is more efficient and reliable than the prior art machines, also avoiding wear over time of the metal springs used in the traditional machines.

Further features and advantages of the invention will become more apparent from the following description of a preferred, non-limiting, example embodiment of an agricultural machine forbreaking up the surface crust of the soil and for mechanically weeding agricultural crops, and the accompanying drawings, also provided by way of an example and preferred, but non-limiting, embodiment, wherein:

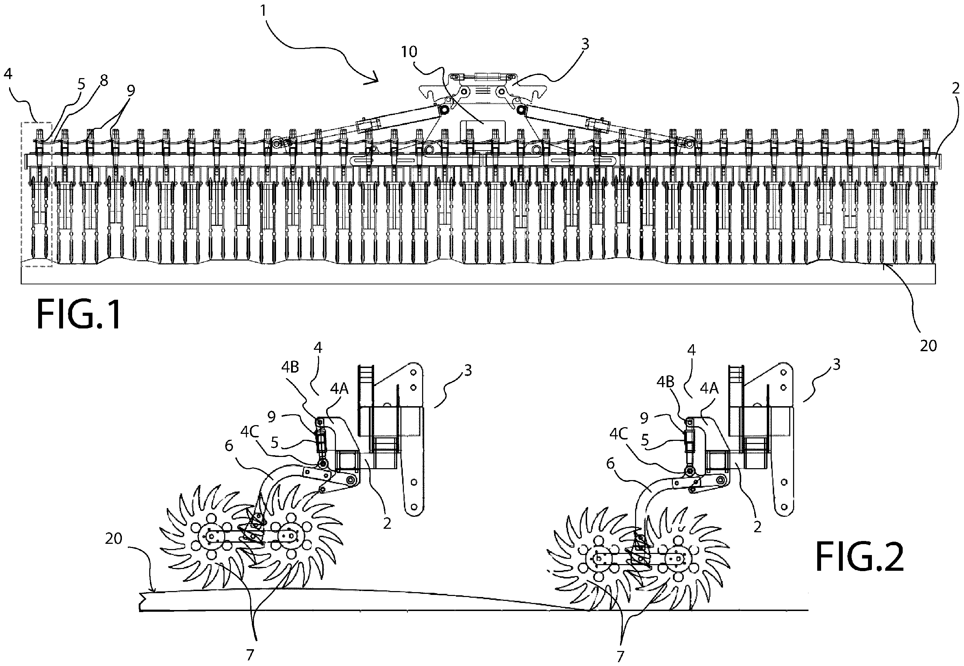

- Figure 1 shows a rear view of the agricultural machine for breaking up the surface crust of the soil and for mechanically weeding agricultural crops, including the various elements of the machine, according to the invention;
- Figure 2 shows a side view, in different positions, of each individual working element, equipped with a hydraulic cylinder or pneumatic actuator (bellows and/or air damper) and metal toothed wheels, used in the machine according to the invention.

With reference to the above-mentioned drawings, the agricultural machine (1) for breaking up the surface crust (20) of the soil and for mechanically weeding agricultural crops is composed of a metal beam frame (2), on the inner side of which, according to a first embodiment, a three-point attachment structure (3) is fixed to a tractor which can be used for lifting the same, whilst on the outer side of the metal beam frame (2) individual elements (4) consisting of an arm or bridge (4A), preferably made of metal, are fixed to connect, by means of an articulation (4B), a hydraulic cylinder or a pneumatic actuator (5) (bellows and/or air damper). Advantageously, the hydraulic cylinder or pneumatic actuator (bellows and/or air damper) (5) is equipped with a connector (9), preferably shaped like a "T", to interconnect a closed pipe (8), preferably made of plastic, into which liquids or fluids, such as oil or emulsified water or air, can be inserted. Again advantageously, the hydraulic cylinder or pneumatic actuator (bellows and/or air damper) (5) is hinged, by means of an articulation (4C), to a support bar (6) of at least one metal toothed wheel (7); according to preferred forms of embodiment, there are two metal toothed wheels (7).

The hydraulic cylinders or pneumatic actuators (bellows and/or air damper) (5), together with the corresponding "T" connectors (9) interconnected to the closed pipe (8), form the components of a closed hydraulic system or a closed pneumatic system, used in the invention, which is connected to a control unit (10) for controlling and regulating its internal pressure. The control unit (10) can also be connected to the tractor's hydraulic or pneumatic systems.

In this way, during the working of agricultural soil, the agricultural machine according to the invention is able to exert a constant pressure (load) on the metal toothed wheels (7), which carry the individual elements (4), with respect to the ground which may present various degrees of unevenness, thanks to the management of the control unit (10), which is programmable in order to apply, each time, an identical force of breaking the surface crust (20), on each uneven area of the soil, by means of the metal toothed wheels (7).

Furthermore, the agricultural machine according to the invention can be used to effectively and uniformly eliminate weeds, which die by aeration of their roots (weeding).

The invention described can be modified and adapted in several ways without thereby departing from the scope of the inventive concept expressed in the accompanying claims.

Moreover, all the details may be replaced by other technically equivalent elements and the materials used, provided they are compatible with the specific use, as well as the dimensions, may vary according to the requirements and the prior art, without departing from the scope of the appended claims.

Where the characteristics and the techniques mentioned in the following claims are followed by reference signs, the reference signs have been used only with the aim of increasing the intelligibility of the claims themselves and, consequently, the reference signs do not constitute in any way a limitation to the interpretation of each element identified, purely by way of example, by the signs numbers.

## Claims

1. Agricultural machine (1) for working the soil, suitable for breaking the soil (20) and for a mechanical weeding of agricultural crops, said machine (1) being configured to be towed by a tractor or being configured to be coupled with said tractor through a three-point attachment structure (3), wherein said machine comprises a metal frame with a beam (2), on which a series of external elements (4) are fixed, each of said elements (4) being composed of an arm or bridge (4A) to which a hydraulic cylinder or a pneumatic actuator (5) is fixed through a first articulation (4B), said hydraulic cylinder or pneumatic actuator (5) being hinged, by means of a second articulation (4C), to a support bar (6) of at least one metal toothed wheel (7) acting on the soil, **characterized in that**
said hydraulic cylinder or pneumatic actuator (5) being provided with a connector (9) for interconnecting a closed pipe (8) forming a closed hydraulic system or a closed pneumatic system with each hydraulic cylinder or pneumatic actuator (5), together with each connector (9) interconnecting said closed pipe (8), being connected to a control unit (10) for managing said closed hydraulic system or closed pneumatic system, in which liquids or fluids, such as oil or emulsified water or air, are inserted with said control unit (10) being programmable so as to fix the pressure or the constant load to be exerted on said at least one toothed metal wheel (7), in order to apply a constant and identical breaking force on said soil (20), thus also avoiding soil weeds.

2. Agricultural machine (1) according to claim 1, wherein said control unit (10) is configured to be connected to the hydraulic or pneumatic systems of the tractor.

3. Agricultural machine (1) according to at least one of the previous claims, wherein two or more toothed metal wheels (7) are used.

4. Agricultural machine (1) according to claim 1, wherein said three-point attachment structure (3) is able to lift said agricultural machine (1).

## Patentansprüche

1. Landwirtschaftliche Maschine (1) zum Bearbeiten des Bodens, geeignet zum Lockern des Bodens (20) und zum mechanischen Unkrautjäten von landwirtschaftlichen Kulturen, wobei die Maschine (1) konfiguriert ist, um von einem Traktor gezogen zu werden, oder konfiguriert ist, um über eine Drei-Punkt-Anbringungsstruktur (3) mit dem Traktor gekoppelt zu werden, wobei die Maschine einen Metallrahmen mit einem Träger (2) umfasst, an dem eine Reihe von externen Elementen (4) befestigt ist, wobei jedes der Elemente (4) aus einem Arm oder einer Brücke (4A) besteht, an dem/der ein Hydraulikzylinder oder ein pneumatischer Aktuator (5) über ein erstes Gelenk (4B) befestigt ist, wobei der Hydraulikzylinder oder der pneumatische Aktuator (5) mittels eines zweiten Gelenks (4C) an einer Tragstange (6) von mindestens einem Metallzahnrad (7) angelenkt wird, das auf den Boden wirkt, **dadurch gekennzeichnet, dass** der Hydraulikzylinder oder der pneumatische Aktuator (5) mit einem Verbinder (9) versehen ist, um eine geschlossene Leitung (8) miteinander zu verbinden, die ein geschlossenes hydraulisches System oder ein geschlossenes pneumatisches System bildet, wobei jeder Hydraulikzylinder oder pneumatische Aktuator (5) zusammen mit jedem Verbinder (9), der die geschlossene Leitung (8) miteinander verbindet, mit einer Steuereinheit (10) verbunden ist, um das geschlossene hydraulische Systems oder geschlossene pneumatischen System zu steuern, in das Flüssigkeiten oder Fluide, wie beispielsweise Öl oder emulgiertes Wasser oder Luft, eingeleitet werden, wobei die Steuereinheit (10) programmierbar ist, um den Druck oder die konstante Last, die auf das mindestens eine Metallzahnrad (7) ausgeübt werden soll, festzulegen, um eine konstante und identische Lockerungskraft auf den Boden (20) auszuüben, wodurch auch Bodenunkraut vermieden wird.

2. Landwirtschaftliche Maschine (1) nach Anspruch 1, wobei die Steuereinheit (10) konfiguriert ist, um mit dem hydraulischen oder pneumatischen System des Traktors verbunden zu sein.

3. Landwirtschaftliche Maschine (1) nach mindestens einem der vorherigen Ansprüche, wobei zwei oder mehrere Metallzahnräder (7) verwendet werden.

4. Landwirtschaftliche Maschine (1) nach Anspruch 1, wobei die Drei-Punkt-Anbringungsstruktur (3) in der Lage ist, die landwirtschaftliche Maschine (1) anzuheben.

## Revendications

1. Machine agricole (1) de travail du sol, apte à casser le sol (20) et à désherber mécaniquement les cultures agricoles, ladite machine (1) étant configurée pour être tractée par un tracteur ou étant configurée pour être attelée audit tracteur par l'intermédiaire d'une structure d'attelage à trois points (3), dans laquelle ladite machine comprend un châssis métallique avec une poutre (2), sur laquelle une série d'éléments externes (4) sont fixés, chacun desdits éléments (4) étant composé d'un bras ou pont (4A) auquel un vérin hydraulique ou un actionneur pneumatique (5) est fixé par l'intermédiaire d'une première articulation (4B), ledit vérin hydraulique ou actionneur pneumatique (5) étant articulé, au moyen d'une seconde articulation (4C), sur une barre de support (6) d'au moins un métal roue dentée (7) agissant sur le sol, **caractérisée en ce que** ledit vérin hydraulique ou actionneur pneumatique (5) étant pourvu d'un connecteur (9) pour interconnecter un tuyau fermé (8) formant un système hydraulique fermé ou un système pneumatique fermé avec chaque vérin hydraulique ou actionneur pneumatique (5), avec chaque connecteur (9) interconnectant ledit tuyau fermé (8), étant relié à une unité de commande (10) pour gérer ledit système hydraulique fermé ou système pneumatique fermé, dans lequel des liquides ou des fluides, tels que de l'huile ou de l'eau ou de l'air émulsifié, sont insérés avec ladite unité de commande (10) étant programmable de manière à fixer la pression ou la charge constante à exercer sur ladite au moins une roue métallique dentée (7), afin d'appliquer une force de rupture constante et identique sur ledit sol (20), évitant ainsi également les mauvaises herbes de sol.

2. Machine agricole (1) selon la revendication 1, dans laquelle ladite unité de commande (10) est configurée pour être connectée aux systèmes hydrauliques ou pneumatiques du tracteur.

3. Machine agricole (1) selon au moins une des revendications précédentes, dans laquelle deux ou plusieurs roues métalliques dentées (7) sont utilisées.

4. Machine agricole (1) selon la revendication 1, dans laquelle ladite structure de fixation à trois points (3) est capable de soulever ladite machine agricole (1).
